# EUROPEAN PATENT SPECIFICATION

(11) **EP 3 498 540 B1**
(45) Date of publication and mention of the grant of the patent: **27.11.2019**
(21) Application number: 18212053.5
(22) Date of filing: 12.12.2018
(51) Int. Cl.: B60R 19/56, B60R 19/38

(54) **REAR PROTECTION EQUIPMENT**
HECKSCHUTZAUSRÜSTUNG
ÉQUIPEMENT DE PROTECTION ARRIÈRE

(30) Priority: 13.12.2017 TR 201720310
(43) Date of publication of application: 19.06.2019
(73) Proprietor: Tirsan Treyler Sanayi Ve Ticaret Anonim Sirketi, 54580 Sakarya (TR)
(72) Inventor: SOYTÜRK, Asl, 54010 Sakarya (TR); BAYRAM, Aykut, 54010 Sakarya (TR)
(74) Representative: Yamankaradeniz, Kemal

(56) References cited:
- EP-A1- 2 143 591
- WO-A1-2006/057584
- DE-A1-102004 024 159
- JP-U- S52 140 522

## Description

### Technical Field

The invention is related to the rear protection equipment (bumper) used in trailer and semi-trailer type vehicles. The equipment, being foldable and extendable, prevents elastic, and possible plastic deformations of the chassis.

The invention, with its capability of acting as a mechanical foot, is developed to avoid the intense stretching that occurs, particularly during a forklift's entrance to the vehicle when loading and unloading from the rear.

### The Current Status of the Technique

Currently, rear protection equipment (bumper) in trailer and semi-trailer vehicles is a legal obligation. Its purposes are, in the case of a collision from the rear, to prevent the colliding vehicle from sliding under the trailer, and in the case of the trailer/semi-trailer hitting an object or another vehicle during a maneuver, to prevent the deformations which may occur on its chassis.

In present applications, foldable rear protection equipment with shock absorbing qualities are available for the convenience of train and ship loading operations. A foldable mechanical foot is bolted to the trailer chassis to reduce the stress applied from the rear by a forklift or any other loading vehicle during the loading and unloading.

An additional component must be attached to the rear protection equipment mandated by the law to prevent elastic and plastic deformations which may occur in the chassis' during the loading/unloading and found in all trailers and semi-trailers. The presence of an additional component creates problems of cost, weight, after-sales issues, and technical problems like the need for providing different methods of attachment of the component to the chassis.

Consequently, due to the inconveniences described above and the inadequacy of the present solutions about the subject, improvements must be made to the rear protection equipment found in all trailers and semi-trailers. Document DE 10 2004 024 159 A1 discloses a trailer according to the preamble of claim 1.

### The Brief Description of The Invention

The invention in question is related to the rear protection equipment used in trailer and semi-trailer type vehicles that caters to the above-described needs.

The primary purpose of the invention is to enable the bumper to do the job of the foldable mechanical foot by itself. Thus, the user may release the locks of the rear protection equipment and have the bumper connect firmly with the ground and protect the chassis from the sudden pressures caused by the forklift.

Another purpose of the invention is to obtain the same convenience achieved by two components, with just a single one.

Another purpose of the invention is to save on the labor costs.

Another purpose of the invention is to reduce the cost. According to the invention a trailer or semi-trailer is proposed with the features of claim 1.

### Figures to Help in Understanding the Invention

Figure 1. The view on the rear protection bar of the outer foot on which the inner foot is implanted enabling the inner foot to connect to the swivel plate. / The view on the rear protection bar of the outer foot enabling the inner foot to connect to the swivel arm by superposition.

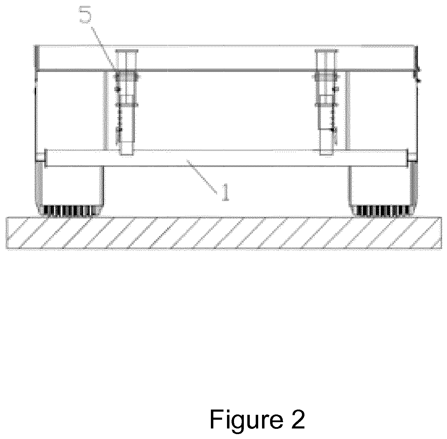

Figure 2. Front view of the rear protection bar which carries all the parts.

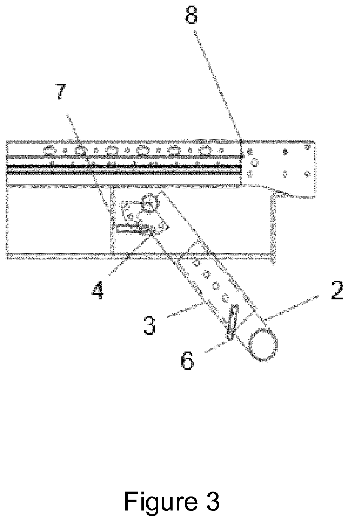

Figure 3. The view of the rear protection bar connected to the chassis.

### PART NUMBERS

1. Rear protection bar
2. Inner foot
3. Outer foot
4. Swivel Plate
5. Rotary shaft
6. Slide locking pin
7. Rotary locking pin
8. Chassis

### Detailed Description Of The Invention

In this detailed description, the preferred constructs of the product - developed for preventing the elastic and possibly plastic deformations of the chassis by enabling the rear protection equipment (bumper) to extend and fold - are explained only to help the comprehensibility of the subject and in a way not to create a restrictive effect.

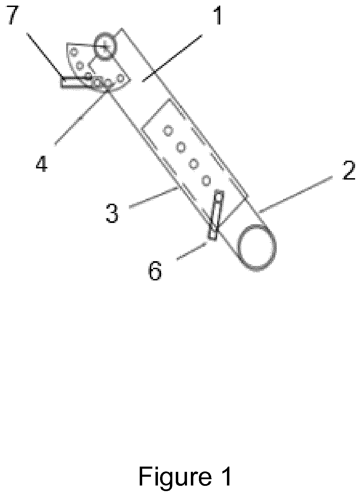

The innovation consists of the rear protection bar which carries on itself all the parts that make up the rear protection equipment (1), the inner foot (2) enabling the rear protection bar (1) slide on the outer foot (3), the outer foot (3) enabling the inner foot (2) to connect to the swivel plate by superposition, the swivel plate (4) enabling the incremental rotation of the rear protection bar (1), the locking pin limiting the vertical movement of the rear protection bar (1), the locking pin preventing the rear protection bar from rotating, and the vehicle chassis carrying the rear protection equipment (figure 1).

The rear protection bar (1) is the protective part of the vehicle against impacts from the rear. The rear protection bar is connected to the chassis (8) by the inner foot (2), the outer foot (3), and the rotary shaft (5).

The rotary shaft (5) on the outer foot (3) enables the rear protection bar (1) to rotate down and up. There is a swivel plate to limit the rotating movement. Bring the rear protection bar to the desired angle and use the rotary locking pin to prevent it from moving.

The inner foot (2) can move vertically within the outer foot (3). Adjust the rear protection bar to the desired height and use the locking pin to prevent it from sliding.

When the vehicle is moving, the rear protection bar (1) with its adjustable height and angle values may be configured to stay within the regulation limits. During the loading and unloading, release the rotary locking pin (7) to bring the rear protection bar (1) perpendicular to the ground. Reinsert the rotary locking pin (7), this time to its new place. Release the slide locking pin (6) pin and let the inner foot slide down within the outer foot until the rear protection bar connects with the ground. Reinsert the slide locking pin (6). Load or unload. The sudden forces applied to the vehicle during the loading or unloading are absorbed by the bumper. When done with the loading or unloading, release the slide locking pin (6) and raise the rear protection bar (1) to the desired height. Reinsert the slide locking pin. Release the rotary pin. Rotate the rear protection bar (1) through the rotating shaft (5) to bring it to a suitable angle on the swivel plate (4). Reinsert the rotary locking pin (7).

## Claims

1. Trailer or semi-trailer with a chassis (8) carrying a rear protection equipment including a rear protection bar (1) connected to the chassis (8) by an inner foot (2), an outer foot (3), and a rotary shaft (5), wherein;
- the inner foot (2) enables the rear protection bar (1) to slide on the outer foot (3),
- the outer foot (3) enables the inner foot (2) to connect to a swivel plate (4) by superposition,
- the rotary shaft (5) on the outer foot (3) enables the rear protection bar (1) to rotate down and up,
- the swivel plate (4) enables the incremental rotation of the rear protection bar (1),
- a slide locking pin (6) limits the vertical movement of the rear protection bar (1),
- a rotary locking pin (7) prevents the rear protection bar (1) from rotating, **characterized in that** during loading and unloading, release of the rotary locking pin (7) allows to bring the rear protection bar (1) perpendicular to the ground, wherein reinsertion of the rotary locking pin (7) to its new place and release of the slide locking pin (6) allows to let the inner foot (2) slide down within the outer foot (3) until the rear protection bar (1) connects with the ground, whereupon the slide locking pin (6) is reinserted.

## Patentansprüche

1. Anhänger oder Sattelauflieger mit einem Fahrgestell (8), das eine hintere Schutzausrüstung trägt, die eine hintere mit dem Fahrgestell (8) durch einen inneren Fuß (2), einen äußeren Fuß (3) und eine Drehwelle (5) verbundene Schutzstange (1) umfasst, wobei;
- der innere Fuß (2) es der hinteren Schutzstange (1) ermöglicht, auf dem äußeren Fuß (3) zu gleiten,
- der äußere Fuß (3) es dem inneren Fuß (2) ermöglicht, an eine Schwenkplatte (4) durch Überlagerung anzuschließen,
- die Drehwelle (5) am äußeren Fuß (3) es der hinteren Schutzstange (1) ermöglicht, sich nach unten und nach oben zu drehen,
- die Schwenkplatte (4) die inkrementelle Drehung der hinteren Schutzstange (1) ermöglicht,
- ein Gleitverriegelungsstift (6) die vertikale Bewegung der hinteren Schutzstange (1) begrenzt,
- ein Drehverriegelungsstift (7) verhindert, dass sich die hintere Schutzstange (1) dreht, **dadurch gekennzeichnet, dass** während des Beladens und Entladens das Lösen des Drehverriegelungsstiftes (7) es ermöglicht, die hintere Schutzstange (1) senkrecht zum Boden zu bringen, wobei das Wiedereinsetzen des Drehverriegelungsstiftes (7) in seine neue Platzierung und das Lösen des Gleitverriegelungsstiftes (6) es ermöglicht, den inneren Fuße (2) nach unten innerhalb des äußeren Fußes (3) gleiten zu lassen, bis die hintere Schutzstange (1) mit dem Boden verbunden ist, woraufhin der Gleitverriegelungsstift (6) wieder eingesetzt wird.

## Revendications

1. Remorque ou semi-remorque avec un châssis (8) portant un équipement de protection arrière comprenant une barre de protection arrière (1) reliée au châssis (8) par un pied interne (2), un pied externe (3) et un arbre rotatif (5),
- ledit pied interne (2) permettant à la barre de protection arrière (1) de coulisser sur le pied externe (3),
- ledit pied externe (3) permettant au pied interne (2) de se raccorder à une plaque pivotante (4) par superposition,
- ledit arbre rotatif (5) sur le pied externe (3) permettant à la barre de protection arrière (1) de tourner vers le bas et vers le haut,
- ladite plaque pivotante (4) permettant la rotation incrémentielle de la barre de protection arrière (1),
- une goupille de verrouillage de coulissage (6) limitant le mouvement vertical de la barre de protection arrière (1),
- une goupille de verrouillage de rotation (7) empêchant la barre de protection arrière (1) de tourner, **caractérisée en ce que** durant le chargement et le déchargement, la libération de la goupille de verrouillage de rotation (7) permettant d'amener la barre de protection arrière (1) perpendiculairement au sol, ladite insertion de nouveau de la goupille de verrouillage de rotation (7) dans son nouvel emplacement et la libération de la goupille de verrouillage de coulissage (6) permettent de laisser le pied interne (2) coulisser vers le bas dans le pied externe (3) jusqu'à ce que la barre de protection arrière (1) soit reliée au sol, après quoi la goupille de verrouillage de coulissage (6) est insérée de nouveau.
